(19) Europäisches Patentamt
European Patent Office
Office européen des brevets

(11) **EP 3 221 385 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(21) Anmeldenummer: **16795345.4**

(22) Anmeldetag: **15.11.2016**

(51) Int Cl.:
**C08G 77/06** (2006.01)  **C08G 77/16** (2006.01)

(86) Internationale Anmeldenummer:
**PCT/EP2016/077698**

(87) Internationale Veröffentlichungsnummer:
**WO 2017/097550 (15.06.2017 Gazette 2017/24)**

(54) **VERFAHREN ZUR HERSTELLUNG VON SILOXANOLEN AUS METALLSALZEN VON SILANOLEN**

METHOD FOR PRODUCING SILOXANOLS FROM ALKALI SALTS OF SILANOLS

PROCÉDÉ DE PRÉPARATION DE SILOXANOLS À PARTIR DE SELS MÉTALLIQUES DE SILANOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2015 DE 102015224732**

(43) Veröffentlichungstag der Anmeldung:
**27.09.2017 Patentblatt 2017/39**

(73) Patentinhaber: **Wacker Chemie AG
81737 München (DE)**

(72) Erfinder: **STEPP, Michael
5122 Überackern (AT)**

(74) Vertreter: **Fritz, Helmut et al
Wacker Chemie AG
Zentralbereich Patente, Marken und Lizenzen
Hanns-Seidel-Platz 4
81737 München (DE)**

(56) Entgegenhaltungen:
**WO-A1-00/40640     US-A- 2 567 110**

• **SHCHEGOLIKHINA O I ET AL:
"cis-Tetra[(organo)(trimethylsiloxy)]cyclo tetrasiloxanes: Synthesis and mesomorphic properties", RUSSIAN CHEMICAL BULLETIN, KLUWER ACADEMIC PUBLISHERS-PLENUM PUBLISHERS, NE, Bd. 56, Nr. 1, 1. Januar 2007 (2007-01-01) , Seiten 83-90, XP019508200, ISSN: 1573-9171, DOI: 10.1007/S11172-007-0014-3 in der Anmeldung erwähnt**

**Beschreibung**

Die Erfindung betrifft flüssige verzweigte Siloxane mit einem hohen Anteil an SiOH-Gruppen sowie ein Verfahren zu ihrer Herstellung.

Verzweigte Siloxane werden üblicherweise durch Hydrolyse/Cokondensation von Silanen mit mindestens drei hydrolysierbaren Resten und gegebenenfalls weiteren mono-, di- oder tetrafunktionellen Silanen hergestellt. Je nach Wahl der Ausgangsverbindungen, ihrer Stöchiometrie und der (Co)Hydrolysebedingungen sind damit diese, üblicherweise als Siliconharze bezeichneten Verbindungen in einer großen Variationsbreite erhältlich. Sie dienen als Weichmacher, Vernetzer, etc. in einer Vielzahl von Anwendungen.

Ein großer Nachteil der auf diesem Weg hergestellten Siloxane sind die im Produkt verbleibenden hydrolysierbaren Reste (meist Alkoxy- oder Chlorreste), welche die Lagerstabilität einschränken, und die unerwünscht bei der Anwendung freigesetzt werden können. Dies ist auch einer der Gründe, weshalb SiOH-reiche verzweigte Siloxane, die z.B. durch hohe Wasserüberschüsse nach diesem allgemeinen Verfahren zugänglich sind, nicht stabil sind bzw. zu hochmolekularen Strukturen aufkondensieren und dadurch meist Feststoff bilden: sie können mit restlichen hydrolysierbaren Gruppen zu höhermolekularen Strukturen kondensieren. Diese unerwünschte Kondensation wird außerdem durch die üblicherweise nicht neutralen Hydrolysebedingungen schon während der (Co)Hydrolyse gefördert, sodass insbesondere niedermolekulare SiOH-reiche Siloxane damit nicht hergestellt werden können.

Verzweigte OH-reiche Siloxane sind schon lange ein Syntheseziel im Hinblick auf umweltfreundliche, lediglich unter Wasserabspaltung kondensierbare Systeme.

Der Zugang zu verzweigten, in Wasser stabilen SiOH-reichen Siloxanen ist in EP0228978 durch Neutralisation von Alkalisiliconaten mit Carbonsäuren beschrieben. Aufgrund der hohen Dichte an Silanolgruppen sind sie nur in großer wässriger Verdünnung stabil. Aufgrund der Abwesenheit von Trimethylsilyl-Resten führt dieses Verfahren zur Bildung eines Feststoffs.

Dagegen reagieren Alkalisiliconate mit großen Überschüssen an Chlorsilanen zu SiOH-freien, bzw. -armen Siloxanen. Dazu sei folgende Veröffentlichung zitiert:

Shchegolikhina, O.I. et al., Russian Chemical Bulletin, International Edition, Vol. 56, No. 1, pp. 83-90, Jan. 2007 cis_Tetra[(organo)(trimethylsiloxy)]cyclotetrasiloxanes: synthesis and mesomorphic properties.

Ausgangsmaterialien für cyclische, SiOH-freie Siloxane sind Siliconat-Salze mit einem Alkali:Si-Verhältnis von 1:1. Sie werden mit einem großen Überschuss (>8 Equivalente bezüglich Siliconat) Trimethylchlorsilan in Gegenwart von Pyridin als Base in hoher Verdünnung in Hexan als Lösungsmittel in die entsprechenden Siloxane überführt.

Gegenstand der Erfindung ist ein Verfahren zur Herstellung von bei 25°C und 1 bar flüssigen 2 bis 12 Gew.-% Silanolgruppen aufweisenden Siloxanen der allgemeinen Formel (1):

$$M_a D_b T_c Q_d M'_e D'_f T'_g \qquad (1),$$

bei dem Metallsalze von Silanolen der allgemeinen Formel (2) oder deren Kondensationsprodukte,

$$R_l Si(OH)_{4-l-m} (O^- Z^{r+}_{l/r})_m \qquad (2)$$

mit Silanen der allgemeinen Formel (3):

$$R'_n SiX_{4-n} \qquad (3)$$

in einem Verhältnis umgesetzt werden, das nach folgender Gleichung berechnet wird:

Mol Organosiliconat der allgemeinen Formel (2) :

$$\text{Mol Silan der allgemeinen Formel (3)} = x * (4-n)/m,$$

wobei x = 0,8 bis 1,2 beträgt,
wobei

**M**    eine Einheit $(R_3SiO_{1/2})$,
**D**    eine Einheit $(R_2SiO_{2/2})$,
**T**    eine Einheit $(RSiO_{3/2})$,
**Q**    eine Einheit $(SiO_{4/2}$,

**M'** eine Einheit ($R'_3SiO_{1/2}$),

**D'** eine Einheit ($R'_2SiO_{2/2}$),

**T'** eine Einheit ($R'SiO_{3/2}$),

**R** einen organischen über Kohlenstoff an Silicium gebundenen Rest,

**R'** Wasserstoff-, einen unsubstituierten oder substituierten Alkoxyrest, einen unsubstituierten oder durch Halogenatome, Epoxy-, Thiol-, Nitril-, (Poly)ether, Carboxyalkyl-, Alkoxy- oder Silylgruppen substituierten Kohlenwasserstoffrest mit 1 bis 20 Kohlenstoffatomen bedeuten,

die Relationen gelten:

$a$ = 0 bis 0,2 * (a+b+c+d+e+f+g),

$b$ = 0 bis 0,2 * (a+b+c+d+e+f+g),

$c$ = 0,3 bis 0,9 * (a+b+c+d+e+f+g),

$d$ = 0 bis 0,2 * (a+b+c+d+e+f+g),

$e$ = 0,05 bis 0,6 * (a+b+c+d+e+f+g),

$f$ = 0 bis 0,6 * (a+b+c+d+e+f+g),

$g$ = 0 bis 0,1 * (a+b+c+d+e+f+g),

und (a+b+c+d+e+f+g) = 1

**1** Werte von 0,8 bis 1,3,

**r** die Werte 1, 2, 3 oder 4,

**n** die Werte 1, 2 oder 3,

**Z** Metallkation und

**X** hydrolysierbare Reste bedeuten, die ausgewählt werden aus Halogenrest und Carboxyalkylrest.

Die Metallsalze von Silanolen der allgemeinen Formel (2) werden auch als Siliconate bezeichnet.

Das bevorzugte eingesetzte Molverhältnis aus Organosiliconat der allgemeinen Formel (2) zu Silan der allgemeinen Formel (3) = x * (4-n)/m, mit x = 0,8 bis 1,2 bedeutet, dass ungefähr äquimolare Mengen an hydrolysierbaren Resten **X** aus den Silanen der allgemeinen Formel (3) pro Siliconatgruppe $O^-$ eingesetzt werden.

**r** bedeutet die Wertigkeit des Metalls und **r+** die Anzahl der positiven Ladungen des Metallkations.

Es war überraschend, durch direkte Umsetzung eines festen Metallsiliconats mit Silan der allgemeinen Formel (3) lösungsmittelfrei oder in einem inerten organischen Lösungsmittel, in dem das Siliconat nicht oder nur sehr gering löslich ist, ohne Hilfsbase in hohen Ausbeuten, flüssige lagerstabile, SiOH-reiche verzweigte Siloxane zu erhalten. Bei der Reaktion eines silanolreichen festen Alkalisiliconats mit einem Silan der allgemeinen Formel (3) wäre zu erwarten, dass keine spezifische Reaktion der Silanolatgruppen erfolgt, sondern auch in hohem Maße die Silanolgruppen unter Bildung von Halogenwasserstoff reagieren und dadurch eine Polykondensation zu hochmolekularen silanolarmen Siloxanen erfolgt. Außerdem gelangt man durch eine anschliessende wässrige Aufarbeitung zu salzfreien, und wenn gewünscht weitestgehend alkoxyfreien Siloxanen.

Der Rest **R** steht dabei vorzugsweise für einen einwertigen Si-C gebundenen unsubstituierten oder durch Halogenatome, $C_{1-6}$-Alkyl oder $C_{1-6}$-Alkoxy- oder Silylgruppen substituierten Kohlenwasserstoffrest mit 1 bis 30 Kohlenstoffatomen, in dem eine oder mehrere, einander nicht benachbarte $-CH_2$-Einheiten durch Gruppen -O-, oder -S- ersetzt sein können. Der Rest **R** kann linear, verzweigt, zyklisch, aromatisch, gesättigt oder ungesättigt sein. Besonders bevorzugt sind unsubstituierte Alkylreste, Cycloalkylreste, Alkylarylreste, Arylalkylreste und Phenylreste. Vorzugsweise weist der Kohlenwasserstoffrest R 1 bis 8 Kohlenstoffatome auf, Besonders bevorzugt sind der Methyl-, Ethyl-, 3,3,3-Trifluorpropyl-, Vinyl-, n-Hexyl-, Isooctyl- (z.B. 2,4,4-Trimethylpent-1-yl-) und der Phenylrest, ganz besonders der Methylrest und der Isooctylrest, insbesondere der Methylrest.

Weitere Beispiele für Reste **R** sind:

n-Propyl-, 2-Propyl-, Chlormethyl-, Methoxymethyl-, Phenoxymethyl-, 2-Cyanoethyl-, 3-Cyanopropyl-, 3-Chlorpropyl-, 3-Thiopropyl-, Prop-2-en-1-yl-, Prop-2-en-2-yl-, 2-(Trimethylsilyl)ethyl-, n-Butyl-, n-But-2-yl-, 2-Methylprop-1-yl-, t-Butyl-, n-Pentyl-, Cyclopentyl-, Cyclohexyl-, n-Heptyl-, n-Octyl-, 2-Ethylhexyl-, n-Nonyl-, n-Decyl-, n-Undecyl-, 10-Undecenyl-, n-Dodecyl-, Isotridecyl-, n-Tetradecyl-, n-Hexadecyl-, Benzyl-, p-Chlorphenyl-, p-Iodphenyl-, p-Bromphenyl-, p-Fluorphenyl-, p-Vinylphenyl-, p-Trifluormethylphenyl-, p-Allyloxyphenyl-, p-Methoxyphenyl-, o-(Phenyl)phenyl-, m-(Phenyl)phenyl-, p-(Phenyl)phenyl-, 1-Naphthyl-, 2-Naphthyl-, 2-Phenyleth-1-yl-, 1-Phenyleth-1-yl-, 3-Phenylprop-1-yl-, 3-Phenoxyprop-1-ylrest. Weitere Beispiele für **R** sind Reste $-(CH_2O)_o-R^8$, $-(CH_2CH_2O)_p-R^9$, und $CH_2CH(CH_3)O)_q-R^{10}$ wobei **o, p** und **q** Werte von 1 bis 10, insbesondere 1, 2, 3 bedeuten. $R^8$, $R^9$ und $R^{10}$ bedeuten vorzugsweise einen unsubstituierten oder durch Halogenatome substituierten Alkylrest mit 1 bis 6 Kohlenstoffatomen. Beispiele für Reste $R^8$, $R^9$ und $R^{10}$ sind der Methyl-, der Ethyl, der Propyl-, der Allyl- und der Butylrest, wobei der Methylrest besonders bevorzugt ist.

**Z** bedeutet bevorzugt Alkalimetall, Erdalkalimetall, Aluminium, Zink, Eisen in seiner 2- oder dreiwertigen Form sowie Titan oder Zirkonium. Insbesondere hat **Z** die Bedeutung Lithium, Natrium, Kalium oder Cäsium, wobei Natrium und Kalium bevorzugt und Kalium besonders bevorzugt sind. **m** bedeutet in der allgemeinen Formel (2) eine Zahl zwischen 0,1 und 3 vorzugsweise beträgt m mindestens 0,1, besonders bevorzugt mindestens 0,4 insbesondere mindestens 0,5 und höchstens 3, bevorzugt höchstens 1, insbesondere höchstens 0,8. Hinsichtlich Ausbeute und Silanolgehalt erweist sich der Bereich von m zwischen 0,3 und 0,7 als optimal.

Die Herstellung der Siliconate der allgemeinen Formel (2) erfolgt vorzugsweise nach den in WO2012/022544, WO2012/159874, WO13075969, WO13174689, WO15140075, WO15176977 beschriebenen Verfahren, beispielsweise durch Sprühtrocknen eines Umsetzungsproduktes aus ein oder mehreren Organotrialkoxysilanen und Alkalilauge oder einem Alkalimethylsiliconat.

Neben trifunktionellen Siloxy-Einheiten können die Siliconate der allgemeinen Formel (2) untergeordnete Anteile mono-, di- oder tetrafunktioneller Siloxy-Einheiten enthalten. Ihr gesamter molarer Anteil liegt jedoch unter 20 mol-%. Der Alkoxygehalt in den Siliconaten der allgemeinen Formel (2) liegt vorzugsweise unter 5 Gew.-%, besonders bevorzugt unter 1 Gew.-%, damit ein möglichst niedriger Alkoxygehalt im silanolhaltigen Siloxan der allgemeinen Formel (1) resultiert.

Die Siliconate der allgemeinen Formel (2) werden vorzugsweise pulverförmig mit mittleren Korngrößen unterhalb 500 $\mu$m, besonders bevorzugt unterhalb 100 pm eingesetzt. Gegebenenfalls können sie Trennmittel in den üblichen Konzentrationen enthalten.

Es können auch Mischungen verschiedener Siliconate eingesetzt werden.

Die hydrolysierbaren Reste **X** in dem Silan der allgemeinen Formel (3) stehen unabhängig voneinander vorzugsweise für einen Halogenrest, besonders bevorzugt für den Chlorrest oder einen Carboxyalkylrest mit vorzugsweise 2 bis 10 Kohlenstoffatomen, besonders bevorzugt für den Acetoxyrest.

n steht in der allgemeinen Formel (3) vorzugsweise für eine Zahl 2 oder 3, besonders bevorzugt für 3.

Die Reste R' in dem Silan der allgemeinen Formel (3) stehen unabhängig voneinander bevorzugt für einen einwertigen gegebenenfalls substituierten Alkoxyrest, insbesondere unsubstituierten Alkoxyrest mit 1 bis 4 Kohlenstoffatomen, einen einwertigen unsubstituierten oder durch Halogenatome, Epoxy-, Thiol-, Nitril-, (Poly)ether (z.B. (Poly)ethylenoxid, (Poly)propylenoxid, (Poly)butylenoxid), Carboxyalkyl-, Alkoxy- oder Silylgruppen substituierten Kohlenwasserstoffrest mit 1 bis 20 Kohlenstoffatomen.

Vorzugsweise ist der Rest **R'** ein Kohlenwasserstoffrest mit 1 bis 16, insbesondere 1 bis 8 Kohlenstoffatomen, besonders bevorzugt sind der Methyl-, Ethyl-, n-Prop-1-yl-, 3,3,3-Trifluorprop-1-yl-, Vinyl-, n-Hex-1-yl-, n-Oct-1-yl-, Isooctyl-(z.B. 2,4,4-Trimethylpent-1-yl-), n-Hexadec-1-yl-, und der Phenylrest, ganz besonders der Methyl-, der Ethyl-, der Phenyl- und der Vinylrest, insbesondere der Methylrest.

Weitere Beispiele für Reste **R'** sind: 2-Prop-1-yl-, Chlormethyl-, Methoxymethyl-, 3-Chlorprop-1-yl-, 2-(Trimethylsilyl)eth-1-yl-, 2-(Trimethoxysilyl)-eth-1-yl-, 2-(Triethoxysilyl)-eth-1-yl-, 2-(Dimethoxymethylsilyl)-eth-1-yl-, 2-(Diethoxymethylsilyl)-eth-1-yl-, n-But-1-yl-, 2-But-1-yl-, 2-Methylprop-1-yl-, t-Butyl-, n-Pent-1-yl-, Cyclopentyl-, Cyclohexyl-, n-Hept-1-yl-, 2-Ethylhex-1-yl-, n-Non-1-yl-, n-Dec-1-yl-, n-Undec-1-yl-, 10-Undecen-1-yl-, n-Dodec-1-yl-, Isotridec-1-yl-, n-Tetradec-1-yl-, n-Hexadec-1-yl-, Ethinyl-, Allyl-, Benzyl-, p-Chlorphenyl-, o-(Phenyl)phenyl-, m-(Phenyl)phenyl-, p-(Phenyl)phenyl-, p-Phenoxyphenyl-, p-Methoxyphenyl-, 1-Naphthyl-, 2-Naphthyl-, 2-Phenyleth-1-yl-, 1-Phenyleth-1-yl-, 3-Phenylprop-1-yl-, Acetoxymethyl-, 3-Acetoxyprop-1-yl-, Acryloxymethyl-, Methacryloxymethyl-, 3-Acryloxyprop-1-yl-, 3-Methacryloxyprop-1-yl-, $-(CH_2)_3-(OCH_2CH_2)_6OMe$, $-CH_2-(OCH_2CH_2)_6OMe$, $-(OCH_2CH_2)_6OMe$,- $(OCH_2CH_2)_6OOC-CH=CH_2$, $-OCH_2CH_2-OOC-CH=CH_2$, $-OCH_2CH_2-OOC-C(CH_3)=CH_2$, 3-Glycidoxyprop-1-yl-, 3-Thioprop-1-yl-, 2-Cyanoeth-1-yl-, 3-Cyanoprop-1-yl-.

Beispiele für Silane der allgemeinen Formel (3) sind $HSiMeCl_2$, $H_2SiCl_2$, $Me_2SiCl_2$, $MeCl_2SiCH_2-Cl$, $ViSiMeCl_2$, $PhSiMeCl_2$, $H_3SiCl$, $Me_3SiCl$, $HSiMe_2Cl$, $ViSiMe_2Cl$, $PhSiMe_2Cl$, $Allyl-SiMe_2Cl$, $n-Hexadec-1-yl-SiMe_2Cl$, $Isooct-1-yl-SiMe_2Cl$, $F_3C-CH_2CH_2-SiMe_2Cl$, $Me_2ClSiCH_2-Cl$, $(EtO)_3SiCl$, $(MeO)_3SiCl$, $(EtO)_2SiMeCl$, $(MeO)_2SiMeCl$, $EtOSiMe_2Cl$, $MeOSiMe_2Cl$, $ClSiMe_2-(CH_2)_3-OOC-CH=CH_2$, $ClSiMe_2-(CH_2)_3-OOC-C(CH_3)=CH_2$, $Cl-SiMe_2-O(CH_2)_2-OOC-CH=CH_2$, $Cl-SiMe_2-O(CH_2)_2-OOC-C(CH_3)=CH_2$, $ClSiMe_2-(CH_2)_3-(O-CH_2-CH_2)_6OMe$, $ClSiMe_2-(CH_2)_3-(O-CH_2-CH_2)_6OOC-CH=CH_2$, $ClSiMe_2-O-CH_2-CH_2-OOCCH=CH_2$, $ClSiMe_2-O-CH_2-CH_2-OOCC(CH_3)=CH_2$, $AcOSiMe_2-CH_2-CH_2-CH_2-SH$, $AcOSiMe_2-CH_2-CH_2-CH_2-O-CH(O)CH_2$, $ClSiMe_2-CH_2-CH_2-CH_2-CN$, $ClSiMe_2-CH_2-CH_2-CN$, $Me_2Si(OAc)_2$, $Me_3SiOAc$.

Me steht dabei für den Methylrest, Et für den Ethylrest, Ph für den Phenylrest, Vi für den Vinylrest, Allyl für den 2-Propen-1-ylrest, Ac für den Acetylrest.

Besonders bevorzugt sind $Me_3SiCl$, $HSiMe_2Cl$, $ViSiMe_2Cl$, $PhSiMe_2Cl$, $Allyl-SiMe_2Cl$, $ViSiMeCl_2$ und $Me_2SiCl_2$, insbesondere $Me_3SiCl$, $ViSiMe_2Cl$ und $Me_2SiCl_2$.

Die Chlorsilane werden bei der Methylchlorsilansynthese nach dem Müller-Rochow-Prozess hergestellt, oder können als Folgeprodukte durch chemische Reaktionen nach bekannten Verfahren hergestellt werden (z.B. Hydrosilylierung, nukleophile Substitution, radikalische Substitution) und sind zumeist kommerziell erhältlich.

Es können auch Mischungen verschiedener Silane der allgemeinen Formel (3) eingesetzt werden. Auch ist es möglich, das Siliconat der allgemeinen Formel (2) sukzessive zuerst mit einem unterstöchiometrischen Anteil Silan der allgemeinen Formel (3) und danach sukzessive mit einem zweiten Silan der allgemeinen Formel (3) umzusetzen. Dieser Vorgang kann auch mehrere hintereinandergeschaltete Umsetzungen mit verschiedenen Silanen der allgemeinen Formel (3) umfassen. Dadurch sind auch Siloxane der allgemeinen Formel (1) mit unterschiedlichen Einheiten M', D' und T' zugänglich.

Die Verbindungen der allgemeinen Formel (1) werden nach dem erfindungsgemäßen Verfahren durch Umsetzung der Siliconate (2) mit den Silanen der allgemeinen Formel (3) erhalten. Dies kann durch Zugabe des Siliconats zum Silan oder umgekehrt durch Zugabe des Silans zum Siliconat erfolgen. Wenn dabei ein möglichst hoher Silanolgehalt im Zielprodukt und eine hohe Ausbeute gewünscht sind, wird bei der Umsetzung möglichst exakt soviel Silan eingesetzt, dass nur die $(OZ^{r+}_{1/r})$-Einheiten im Siliconat abreagieren. Vorteilhafterweise wird dabei das Siliconat der allgemeinen Formel (2) vorgelegt und das Silan (3) dosiert. Dadurch gelangt eine geringe Menge hochreaktives Silan mit einem Überschuss Siliconat in Kontakt, wodurch die Selektivität der Reaktion - d.h. die Reaktion von Si-X aus dem Silan mit Si-$(O\text{-}Z^{r+}_{1/r})$ aus dem Siliconat - gesteigert wird. Dabei liegt vorteilhafterweise zumindest eine Komponente in flüssiger Form oder gelöst vor. Die meisten Silane der allgemeinen Formel (3) sind bei 25°C unter 1 bar flüssig, die Siliconate der allgemeinen Formel (2) fest. Es bietet sich deshalb an, die Siliconate entweder trocken, fein verteilt als Pulver - beispielsweise in einer durch Einblasen von Inertgas erzeugten Wirbelschicht - vorzulegen oder in einem inerten Lösungsmittel zu lösen oder aufzuschlämmen und die flüssigen Silane pur zu dosieren, um eine möglichst rasche Reaktion aufgrund der guten Durchmischung zu gewährleisten. Vorzugsweise findet die Umsetzung in einem Lösungsmittel statt. Als Lösungsmittel kommen vorzugsweise aprotische polare und unpolare organische Lösungsmittel vorzugsweise Kohlenwasserstoffe, Ether, Ketone und Carbonsäureester zum Einsatz, beispielsweise lineare, verzweigte oder cyclische Alkane wie n-Pentan, n-Hexan, n-Heptan, n-Octan, Isohexan, Isooctan, Cyclohexan, Aromaten wie Benzol, Toluol, o-Xylol, m-Xylol, p-Xylol, Ether wie Diethylether, Methylethylether, Di-n-propylether, Di-n-butylether, Methyl-t-butylether, Diphenylether, Methylphenylether, Tetrahydrofuran, Methylisobutylketon, Aceton, Essigsäuremethylester, Essigsäureethylester, Essigsäure-n-butylester, Methylethylketon (2-Butanon), Dioxan, Tetrahydropyran, 4-Methyltetrahydropyran, Ethylenglykoldimethylether, Diethylenglykoldimethylether, Triethylenglykoldimethylether, Ethylenglykoldibutylether oder Siloxane, wie Hexamethyldisiloxan, Octamethyltrisiloxan, Octamethylcyclotetrasiloxan, Decamethylcyclopentasiloxan, Methyl-tris-trimethylsiloxysilan oder Gemische verschiedener Lösungsmittel.

Die Geschwindigkeit der in der Regel exothermen erfindungsgemäßen Reaktion aus Siliconat der allgemeinen Formel (2) und Silan der allgemeinen Formel (3) wird vorzugsweise durch Wahl der Dosiergeschwindigkeit der einen Komponente und Wahl der Temperierung der Reaktionsmischung gesteuert. Bei der Wahl der (maximalen) Reaktionstemperatur der Umsetzung spielen naturgemäß die Siedepunkte der eingesetzten und gebildeten Stoffe, sowie deren thermische Stabilitäten eine entscheidende Rolle. Vorzugsweise werden die Bedingungen der Umsetzung so gewählt, dass eine Temperatur von 100°C, besonders bevorzugt 80°C, insbesondere 40°C in der Reaktionsmischung nicht überschritten wird. Niedrigere Temperaturen bewirken möglicherweise eine geringfügige Verbesserung der Selektivität, führen aber zu einer längeren Reaktionszeit und verringern die Raum/Zeit-Ausbeute, deshalb liegen die Untergrenzen für die Reaktionstemperaturen vorzugsweise oberhalb von -40°C, besonders bevorzugt oberhalb von -20°C insbesondere oberhalb von 0°C. Dabei kann die Reaktionsmischung sowohl gekühlt als auch geheizt werden, es können auch einzelne Komponenten auf eine bestimmte Temperatur gebracht werden, bevor sie miteinander in Kontakt kommen, z.B. um die Reaktionswärme nutzen zu können. Das Verfahren kann sowohl batchweise z.B. in einem Rührwerk als auch kontinuierlich z.B. in einem Schleifen- oder Rohrreaktor, oder, insbesondere sofern auf ein inertes Lösungsmittel verzichtet wird, einem Extruder, einem Wirbelbettreaktor oder einem Schaufeltrockner durchgeführt werden.

Aufgrund der Hydrolyseempfindlichkeit der Silane der allgemeinen Formel (3) wird die Umsetzung des Siliconats der allgemeinen Formel (2) mit Silan der allgemeinen Formel (3) vorzugsweise unter Feuchtigkeitsausschluss, d.h. in einer getrockneten Atmosphäre oder unter reduziertem Druck, besonders bevorzugt unter Inertgas, wie Stickstoff, $CO_2$, Argon, Magerluft, bei Normaldruck durchgeführt. Niedrigere Drücke können von Vorteil sein, wenn flüchtige Nebenprodukte wie beispielsweise **HX** aus der Reaktionsmischung umgehend entfernt werden sollen, um unerwünschte Nebenreaktionen (z.B. Kondensation) zu vermeiden.

Die Konzentration an eingesetztem inertem Lösungsmittel beträgt vorzugsweise mindestens 40, besonders bevorzugt mindestens 50, insbesondere mindestens 80 Gewichtsprozent bezogen auf Siliconat der allgemeinen Formel (2). Wie in den Beispielen ersichtlich, bewirkt ein höherer Verdünnungsgrad einen höheren Silanolgehalt im Zielprodukt, verringert aber gleichzeitig die Raum/Zeit-Ausbeute. Das Optimum für die jeweilige Umsetzung kann vom Fachmann in einfachen Vorversuchen ermittelt werden.

Das Molverhältnis aus Siliconat der allgemeinen Formel (2) und Silan der allgemeinen Formel (3) hat naturgemäß einen Einfluss auf Silanolgehalt und Ausbeute des Zielprodukts.

Der Gehalt an Silanolgruppen der Siloxane der allgemeinen Formel (1) stammt überwiegend aus den Silanolgruppen der Metallsalze von Silanolen der allgemeinen Formel (2), ebenso wie gegebenenfalls vorhandene Alkoxyreste im Siloxan der allgemeinen Formel (1). Ihr Gehalt kann durch wässrige Aufarbeitung bei dem erfindungsgemäßen Verfahren verringert werden. Ein großer Vorteil der erfindungsgemäß hergestellten Siloxane der allgemeinen Formel (1) liegt in dem niedrigen Alkoxygehalt, der vorzugsweise höchstens 0,2 Gewichtsprozent beträgt, besonders bevorzugt höchstens 0,1 Gewichtsprozent bezogen auf das Siloxan der allgemeinen Formel (1).

Das eingesetzte Molverhältnis aus Organosiliconat der allgemeinen Formel (2) zu Silan der allgemeinen Formel (3) = x * (4-n)/m. Darin bedeutet **x** vorzugsweise 1,0, mindestens jedoch besonders bevorzugt 0,9, insbesondere 0,95 und höchstens besonders bevorzugt 1,1, insbesondere 1,05.

Größere Überschüsse an silangebundenem **X** bedeuten, dass nicht nur die im Siliconat gebundenen Metall-Ionen, sondern auch freie Silanolgruppen im Siliconat zur Reaktion gelangen und damit **HX** freigesetzt wird. Ohne Anwesenheit einer Hilfsbase kann dies eine Kondensation in Gang setzen, die zu einer Verringerung des Silanolgehalts im Zielprodukt der allgemeinen Formel (1) und möglicherweise unerwünschtem Molmassenaufbau führt. Weit unterstöchiometrische Anteile dagegen hinterlassen noch unumgesetzte SiOZ-Anteile im Siliconat, was zu einem Ausbeuteverlust an flüssigem Siloxan der allgemeinen Formel (1) sowie einem Anstieg unlöslicher Bestandteile führen kann.

Zum Abfangen des bei der Reaktion von Silan der allgemeinen Formel (3) mit protischem Wasserstoff (beispielsweise aus Feuchtigkeit in den Ausgangsmaterialien oder Silanolgruppen im Siliconat) gegebenenfalls gebildeten Nebenprodukts **HX** kann eine Hilfsbase oder ein Puffersystem zugesetzt werden. Als Hilfsbase können basische Salze oder stickstoffhaltige Verbindungen wie Amine, Harnstoffe, Imine, Guanidine, Amide eingesetzt werden. Beispiele für basische Salze sind Ammoniumhydrogencarbonat, Natriumcarbonat, Natriumhydrogencarbonat, Kaliumcarbonat, Kaliumhydrogencarbonat, Calciumcarbonat, Calciumhydrogencarbonat, Calciumoxid, Magnesiumcarbonat, Magnesiumoxid. Beispiele für stickstoffhaltige Verbindungen sind Ammoniak, Ethylamin, Butylamin, Trimethylamin, Triethylamin, Tributylamin, Harnstoff, Tetramethylharnstoff, Guanidin, Tetramethylguanidin, Imidazol, N-Methylimidazol, N-Ethylimidazol, Piperidin, Pyridin, Picolin. Vorzugsweise kommen Stickstoffverbindungen zum Einsatz, bei denen die Stickstoffatome keinen Wasserstoff tragen. Als Puffer können beispielsweise Phosphatpuffer- oder Citratpuffersysteme oder Aminosäuren eingesetzt werden.

Vorzugsweise wird die Hilfsbase bzw. das Puffersystem höchstens äquimolar bezüglich des Silans der allgemeinen Formel (3) eingesetzt. Pro Mol-Äquivalent **X** aus dem oder den eingesetzten Silanen der allgemeinen Formel (3) in der Reaktionsmischung werden vorzugsweise höchstens 0,5, besonders bevorzugt höchstens 0,1, insbesondere 0,0 Basenäquivalente Hilfsbase bzw. Puffer eingesetzt. Es können auch größere Zusatzmengen Hilfsbase bzw. Puffer eingesetzt werden, diese bringen jedoch meist keinen Vorteil, sondern verringern die Raum-Zeit-Ausbeute und damit die Wirtschaftlichkeit des Verfahrens. Bevorzugt wird die Hilfsbase bzw. das Puffersystem mit dem Siliconat der allgemeinen Formel (2) vorgelegt und das Silan der allgemeinen Formel (3) zudosiert. Es können aber auch beide Edukte parallel zu Hilfsbase bzw. Puffersystem dosiert werden, wobei die Hilfsbase oder das Puffersystem vorgelegt wird. Es können auch Gemische verschiedener Hilfbasen und/oder Puffersysteme eingesetzt werden.

Zur Entfernung der bei der Reaktion von Siliconat der allgemeinen Formel (2) mit Silan der allgemeinen Formel (3) gebildeten oder gegebenenfalls zugesetzter Salze werden diese entweder als Feststoff durch Filtrieren, Zentrifugieren oder Sedimentieren oder besonders bevorzugt durch Wasserzugabe aufgelöst und mittels Phasentrennung vom Zielprodukt bzw. der Lösung des Zielprodukts im organischen Lösungsmittel abgetrennt. In diesem Fall sollte die Löslichkeit des gewählten inerten Lösungsmittels oder Lösungsmittelgemisches in Wasser möglichst gering sein und vorzugsweise 10 Gewichtsprozent besonders bevorzugt 5 Gewichtsprozent bei 20°C nicht übersteigen. Dadurch wird eine Aufbereitung für die Wiederverwendung des Lösungsmittels erleichtert.

Die zugesetzte Wassermenge wird so bemessen, dass die Salzmenge und gegebenenfalls zugesetzte Hilfsbase weitestgehend gelöst werden kann und eine Phasentrennung zwischen wässriger und organischer Phase möglich ist. Sie liegt vorzugsweise mindestens bei dem einfachen, besonders bevorzugt bei mindestens dem 3-fachen, insbesondere bei mindestens dem 5-fachen der eingesetzten Siliconatmenge.

Gegebenenfalls kann bei der wässrigen Aufarbeitung die Phasentrennung erleichtert werden, wenn vorher ungelöste Bestandteile durch Filtrieren, Zentrifugieren oder Sedimentieren abgetrennt werden.

Das Siloxan der allgemeinen Formel (1) wird vorzugsweise durch Abziehen der flüchtigen Bestandteile (z.B. Lösungsmittel oder anderer flüchtiger Nebenbestandteile) durch Ausheizen beispielsweise am kurzen Weg in einer Batch-Destillationsapparatur oder einem Fallfilm- oder Dünnschichtverdampfer vorzugsweise unter vermindertem Druck von höchstens 100 hPa, besonders bevorzugt höchstens 20 hPa, insbesondere höchstens 10 hPa als Destillationsrückstand isoliert. Dabei werden vorzugsweise 50°C nicht überschritten, um eine Kondensation der Silanolgruppen zu vermeiden.

Für die wässrige Aufarbeitung kann zur Verbesserung der Phasentrennung ein zusätzliches Lösungsmittel zugesetzt werden, dessen Löslichkeit in Wasser möglichst gering ist und vorzugsweise 5 Gew.-% bei 20°C nicht übersteigt. Es können auch Stoffe zur Verbesserung der Phasentrennung bei der wässrigen Aufarbeitung eingesetzt werden, beispielsweise Alkohole wie Glycerin, Methanol, Ethanol, 1,2-Ethandiol oder 1,2-Propandiol oder Carbonsäureester wie Essigsäuremethyl- oder -ethylester.

Auch die Kristallisation des Siloxans der allgemeinen Formel (1) stellt eine Möglichkeit der Isolierung oder Reinigung dar.

Das Siloxan der allgemeinen Formel (1) ist ebenfalls Gegenstand der Erfindung.

Bevorzugt werden Siloxane hergestellt, bei denen

$a$ = 0 bis 0,15 * (a+b+c+d+e+f+g).
Bevorzugt werden Siloxane hergestellt, bei denen
$b$ = 0 bis 0,15 * (a+b+c+d+e+f+g).
Bevorzugt werden Siloxane hergestellt, bei denen
$c$ = 0,4 bis 0,85 * (a+b+c+d+e+f+g), insbesondere c = 0,5 bis 0,8 * (a+b+c+d+e+f+g).
Bevorzugt werden Siloxane hergestellt, bei denen
$d$ = 0 bis 0,15 * (a+b+c+d+e+f+g).
Bevorzugt werden Siloxane hergestellt, bei denen
$e$ = 0,1 bis 0,5 * (a+b+c+d+e+f+g), insbesondere e = 0,2 bis 0,45 * (a+b+c+d+e+f+g).
Bevorzugt werden Siloxane hergestellt, bei denen
$f$ = 0 bis 0,5 * (a+b+c+d+e+f+g), insbesondere f = 0 bis 0,3* (a+b+c+d+e+f+g).
Bevorzugt werden Siloxane hergestellt, bei denen
$g$ = 0 bis 0,05 * (a+b+c+d+e+f+g).

Bevorzugte mittlere Molmassen Mw der Siloxane liegen zwischen 400 und 6000 g/mol, insbesondere zwischen 500 und 4000 g/mol.

In vorliegender Anmeldung werden alle mittleren Molmassen Mw bestimmt mittels GPC (Säulentemperatur 45°C, Flussrate 1.00 mL/min, Druck 50,3 bar, kalibriert gegen Polystyrol-Standard; Toluol als Elutionsmittel; RI-Detektor).

Vorzugsweise weisen die Siloxane der allgemeinen Formel (1) 3 bis 10 Gew. -% Silanolgruppen auf.

Der Silanolgehalt der Siloxane kann über die Zerwitinow-Reaktion und NMR-spektroskopisch bestimmt werden.

Die erfindungsgemäßen Siloxane können für Anwendungen eingesetzt werden, bei denen eine Freisetzung von organischen Spaltprodukten unerwünscht ist.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 1000 hPa (abs.) durchgeführt.

Der Festgehalt wird jeweils mit der Festgehaltswaage HR73 Halogen Moisture Analyzer von Mettler Toledo bei 160°C bestimmt.

Beispiele:

a) Herstellung Siliconat-Pulver

Die verwendeten Siliconat-Pulver können nach WO2012/022544 (PCT/EP2011/061766) und WO2012/159874 (PCT/EP2012/058370) aus Methyltrimethoxysilan (WACKER CHEMIE AG) oder Mischungen von Methyltrimethoxysilan mit n-Hexyltrimethoxysilan (Sigma-Aldrich) oder Isooctyltrimethoxysilan (SILRES® BS 1316, WACKER CHEMIE AG) und unterschiedlichen Anteilen KOH bzw. NaOH und Wasser hergestellt werden. Der Festgehalt beträgt jeweils mindestens 95%. Die Zusammensetzung kann mittels Elementaranalyse oder aus der Mengenbilanz der Herstellung bestimmt werden. Bei den Mischsystemen Methyl/Hexyl bzw. Methyl/Isooctyl und bei den sprühgetrockneten Siliconaten wird eine mittlere Formel aus der Stöchiometrie der Einsatzprodukte ermittelt (z.B. Isooctyl : Methyl : K = 0,25 : 0,75 : 0,75 => mittlere Formel des Siliconats: MeSi(OH)(OK)-[O-SiMe (OK)]$_2$[OSi$^i$Octyl(OH)$_2$]).

b) Umsetzung mit Chlorsilan

Zu einer Suspension von Siliconatpulver in dem jeweiligen Lösungsmittel wird bei 20°C unter Rühren vorsichtig jeweils ein Mol-Äquivalent Si-gebundenes Chlor in Form von Chlorsilan oder Chlorsilangemischen bezogen auf ein Mol-Äquivalent Alkalimetall so zudosiert, dass die Temperatur der Reaktionsmischung 35°C nicht übersteigt. Man lässt auf Raumtemperatur kommen und bei Raumtemperatur noch eine gewisse Zeit rühren, versetzt anschließend die Suspension mit vollentsalztem Wasser, filtriert unlösliche Bestandteile ab und engt nach Phasentrennung die obere, organische Phase bei 40°C/3 hPa ein. Als Rückstand verbleiben jeweils klare, farblose Flüssigkeiten, deren Zusammensetzung mittels $^1$H- und $^{29}$Si-NMR-Spektrospkopie bestimmt wird. Im $^{29}$Si-NMR-Spektrum kann die Stöchiometrie der Siloxyeinheiten und damit der SiOH-Gehalt sehr genau bestimmt werden, das $^1$H-NMR-Spektrum klärt über mögliche Nebenbestandteile auf, insbesondere Reste an Alkoxygruppen und Lösungsmittelspuren, außerdem kann durch Derivatisierung der SiOH-Gruppen mit Trichloracetylisocyanat der im $^{29}$Si-NMR-Spektrum ermittelte SiOH-Anteil überprüft werden. Bei Bedarf können die erhaltenen Verbindungen darüber hinaus beispielsweise durch Size Exclusion Chromatography (SEC: mittlere Molmasse und Molmassenverteilung), Viskositätsmessung, IR-Spektroskopie und Chlorgehaltsbestimmung charakterisiert werden.

In den nachfolgend aufgeführten Beispielen liegen die Methoxyanteile in den erfindungsgemäßen Siloxanolen jeweils unter 0,01 Gew.-% (bestimmt aus den $^1$H- und "Si-NMR-Spektren)

Abkürzungen:

**MTBE :** Methyl-tert-butylether (abcr GmbH)
**EtAc :** Essigsäureethylester (Merck KGaA)
**BuAc :** Essigsäure-n-butylester (Merck KGaA)
**MIBK :** Methylisobutylketon (4-Methylpentan-2-on) (Merck KGaA)
**MEK :** Methylethylketon (Butan-2-on) (Merck KGaA)
**M :** molarer Anteil [$Me_3SiO_{1/2}$] aus $^{29}$Si-NMR (Peaks zwischen +12,5 ppm und +5,5 ppm)
**$T^{(OH)2}$ :** molarer Anteil [$MeSi(OH)_2O_{1/2}$] aus $^{29}$Si-NMR (Peaks zwischen -44 ppm und -46 ppm).
**$T^{OH}$ :** molarer Anteil [$MeSi(OH)O_{2/2}$] aus $^{29}$Si-NMR (Peaks zwischen - 50 ppm und -60 ppm).
**T :** molarer Anteil [$MeSiO_{3/2}$] aus $^{29}$Si-NMR (Peaks zwischen -62 ppm und -70 ppm).
**D :** molarer Anteil [$Me_2SiO_{2/2}$] aus $^{29}$Si-NMR (Peaks zwischen - 13 ppm und - 24 ppm).

**OH-Gehalt:** der Gewichtsanteil OH (Molmasse 17 g/mol) am Siloxan (berechnet aus dem $^{29}$Si-NMR-Spektrum). Bei den gemischten Siloxanen (Methyl/$^i$Octyl bzw. Methyl/n-Hexyl) wird das Mischungsverhältnis der Alkylreste bei der Berechnung berücksichtigt.

**Ausbeuten:** kalkuliert auf Basis der mittleren Formel des eingesetzten Siliconats unter der Annahme, dass Kalium bzw. Natrium durch $Me_3Si$ bzw. in entsprechender Mischung mit $Me_2Si$ ersetzt wird.

**Ausbeuten M/T/D:** kalkuliert auf Basis der im $^{29}$Si-NMR-Spektrum gefundenen Zusammensetzung und der eingesetzten Stoffmengen an Siliconat und Chlorsilan(en).

**Beispielserie 1:** zeigt die Relationen zwischen Alkali/Si-Verhältnis sowie der Art des Alkalimetalls im Siliconat zum SiOH-Gehalt.

Nach dem oben beschriebenen Verfahren werden Kalium- oder Natriummethylsiliconatpulver mit der bezüglich Alkali äquimolaren Menge Trimethylchlorsilan in MTBE umgesetzt.

Tabelle 1:

| Beispiel | 1.1 | 1.2 | 1.3 | 1.4 | 1.5 |
|---|---|---|---|---|---|
| Alkalimetall | K | K | K | Na | K |
| Molverhältnis Alkali:Si | 0,3 | 0,56 | 0,85 | 0,85 | 1,2 |
| Lösungsmittel Konzentration Siliconat [Gew.-%] | MTBE 8,6 | MTBE 8,3 | MTBE 8,6 | MTBE 8,6 | MTBE 8,6 |
| M | 30 | 31,7 | 46,4 | 26,2 | 54,1 |
| $T^{OH}$ | 23 | 33,1 | 18,7 | 39,9 | 10,1 |
| $T^{(OH)2}$ | 0 | 0,6 | 0,9 | 2 | 0,3 |
| T | 47 | 34,6 | 34,0 | 31,9 | 35,4 |
| OH-Gehalt (Gew-%) | 5,3 | 7,8 | 4,6 | 10 | 2,4 |
| Filterkuchen in Gew.-% bezüglich Siliconat | 47,3 | 6,7 | 3,3 | 86,2 | 13,3 |
| Ausbeuten M/T [%] | 64/43 | 84/95 | 88/100 | 11/26 | 70/77 |
| Ausbeute [%] | 48 | 88 | 92 | 19 | 74 |

Vergleicht man die Ansätze 1.1, 1.2, 1.3 und 1.5 so fällt auf, dass mit steigendem Kalium-Anteil die Silanolkonzentration fällt. Aus 1.3 und 1.4 wird ersichtlich, dass Natrium im Siliconat zwar zu höheren Silanolgehalten führt, aber der Feststoffanteil massiv ansteigt.

**Beispielserie 2** zeigt den Einfluss der Art des Lösungsmittels Daraus wird ersichtlich, dass das Lösungsmittel einen signifikanten Einfluss auf den SiOH-Gehalt hat. Mit MTBE und Ethylacetat lassen sich die höchsten SiOH-Konzentrationen erzielen, während Butylacetat und MIBK die etwas höheren Ausbeuten liefern. MEK und MIBK besitzen den Nachteil einer Verfärbung, die auf die Reaktivität der beiden Ketone mit Basen zurückzuführen ist.

Einsatzstoffe/-mengen:

15 g Kaliummethylsiliconat K:Si=0,56 [liegt laut Elementaranalyse tetramer vor: 0,147 mol MeSi, 0,08 mol K]
8,6 g Trimethylchlorsilan (0,08 mol)
165 g Lösungsmittel
105 g vollentsalztes Wasser (zur Aufarbeitung)

Tabelle 2:

| Beispiel | 2.0 | 2.1 | 2.2 | 2.3 | 2.4 | 2.5 |
|---|---|---|---|---|---|---|
| Lösungsmittel | Isopar® E | MTBE | EtAc | BuAc | MIBK | MEK |
| M | 34,2 | 31,7 | 30,5 | 33,0 | 33,5 | 33,4 |
| $T^{OH}$ | 9,2 | 33,1 | 28,9 | 25,8 | 22,6 | 21,4 |
| $T^{(OH)2}$ | 0 | 0,6 | 0,4 | 0,2 | 0,4 | 0,6 |
| T | 56,6 | 34,6 | 40,3 | 41,0 | 43,4 | 44,7 |
| OH-Gehalt (Gew-%) | 2,1 | 7,8 | 6,8 | 6,0 | 5,4 | 5,2 |
| Auswaage [g] | 7,2 | 15,5 | 15,8 | 16,3 | 17,3 | 16,3 |
| Filterkuchen [g] bezüglich Siliconat | 8,1 54% | 1 6,7% | 0,8 5,3% | 0,6 4% | 1 6,7% | 0,7 4,7% |
| Ausbeuten M/T [%] | 45/44 | 84/95 | 82/99 | 92/98 | 100/1 00 | 93/98 |
| Ausbeute [%] | 41 | 88 | 90 | 93 | 99 | 93 |
| Aussehen | farblos/trüb | farblos/klar | farblos/klar | farblos/klar | gelblich/klar | braun /klar |

**Beispielserie 3** zeigt die Einflüsse der

Lösungsmittelkonzentration und der Nachreaktionszeit im Falle von MTBE
Ein höherer Lösungsmittelanteil und/oder kürzere Reaktionszeiten ergeben einen höheren Silanolgehalt, wobei der Anteil an Feststoff (höhermolekulare Harze, Methylkieselsäuren) im letzteren Fall zu Lasten der Ausbeute ansteigt (3.2a/b). Einsatzstoffe/-mengen:

15 g Kaliummethylsiliconat K:Si=0,56 [liegt laut Elementaranalyse tetramer vor: 0,147 mol MeSi, 0,08 mol K]
8,6 g Trimethylchlorsilan (0,08 mol), MTBE.

Die Wassermenge für die Aufarbeitung wird jeweils so bemessen, dass eine gute Phasentrennung möglich ist.

Tabelle 3:

| Beispiel | 3.1 | 3.2a | 3.2b | 3.3 |
|---|---|---|---|---|
| Konzentration Siliconat[Gew.-%] | 8,3 | 16,7 | 16,7 | 23 |
| Nachreaktionszeit bei 20°C | 20h | 20h | 1,5h | 70h |
| M | 31,7 | 33,5 | 31,7 | 32,3 |
| Mw (g/mol) | n.b. | 600 | n.b. | 1400 |
| $T^{OH}$ | 33,1 | 27,0 | 29,2 | 15,6 |
| $T^{(OH)2}$ | 0,6 | 0,4 | 0,6 | 0 |

(fortgesetzt)

| Beispiel | 3.1 | 3.2a | 3.2b | 3.3 |
|---|---|---|---|---|
| T | 34,6 | 39,1 | 38,5 | 52,1 |
| OH-Gehalt (Gew-%) | 7,8 | 6,4 | 7,0 | 3,6 |
| Auswaage [g] | 15,5 | 15,6 | 14,0 | 14,1 |
| Filterkuchen [g] bezüglich Siliconat | 1 6,7% | 1,6 10,7% | 3,2 21,3% | 2,6 17,3% |
| Ausbeuten M/T [%] | 84/95 | 89/93 | 76/86 | 79/87 |
| Ausbeute [%] | 88 | 89 | 80 | 80 |

**Beispielserie 4** zeigt den Einfluss von längeren Alkylresten im Siliconat

Tabelle 4a n-Hexyl/Methyl-Siloxane

| Beispiel | 4a.1 | 4a.2 | 4a.3 |
|---|---|---|---|
| Molverhältnisse | n-Hexyl:Me:K 25:75:75 Azeotrop getrocknet | n-Hexyl:Me:K 17:83:83 sprühgetrocknet | n-Hexyl:Me:K 17:83:83 Azeotrop getrocknet |
| Einsatzmenge [g] | 15 | 6,7 | 15 |
| Lösungsmittel Siliconat-Konzentration [Gew.-%] | MTBE 8,6% | MTBE 8,7% | MTBE 8,6% |
| M | 43,5 | 40,6 | 40,9 |
| $T^{OH}$ | 14,4 | 20,9 | 15,7 |
| $T^{(OH)2}$ | 1,0 | 1,3 | 0,9 |
| T | 41,2 | 37,1 | 42,5 |
| OH-Gehalt (Gew-%) | 3,3 | 4,9 | 3,7 |
| Auswaage [g] | 15 | 7 | 13,5 |
| Filterkuchen [g] bezüglich Siliconat | 0,8 5,3% | 0 0% | 2,2 14,7% |
| Ausbeute | 84% | 85% | 73% |

Das sprühgetrocknete Siliconat liefert höhere Ausbeuten und einen deutlich höheren Silanol-Anteil (4a.2/3). Ein höherer Hexylanteil im Siliconat bedingt eine bessere Ausbeute bei vergleichbarem Silanolgehalt (4a.1/3).

Tabelle 4b $^i$Octyl/Methyl-Siloxane

| Beispiel | 4b.1 | 4b.2 | 4b.3 | 4b.4 | 4b.5 |
|---|---|---|---|---|---|
| Molverhältnisse | $^i$Octyl: Me:K 17:83:83 Azeotrop getrock net | $^i$Octyl: Me:K 17: 83:83 Sprühgetrock -net | $^i$Octyl: Me:K 25:75:75 Azeotrop getrock -net | $^i$Octyl: Me:K 25: 75:75 Sprühgetrock -net | $^i$Octyl: Me:K 25: 75:75 Sprühgetrock -net |
| Einsatzmenge [g] | 15 | 7,2 | 15 | 15 | 15 |
| Lösungsmittel | MTBE | MTBE | MTBE | MTBE | IsoparE |

(fortgesetzt)

| Beispiel | 4b.1 | 4b.2 | 4b.3 | 4b.4 | 4b.5 |
|---|---|---|---|---|---|
| Molverhältnisse | [i]Octyl: Me:K 17:83:83 Azeotrop getrock net | [i]Octyl: Me:K 17:83:83 Sprühgetrock-net | [i]Octyl: Me:K 25:75:75 Azeotrop getrock-net | [i]Octyl: Me:K 25:75:75 Sprühgetrock-net | [i]Octyl: Me:K 25:75:75 Sprühgetrock-net |
| Siliconat-Konzentration [Ge w.-%] | 8,6% | 6,7% | 8,6% | 8,6% | 8,6% |
| M | 42,0 | 37,3 | 39,5 | 24,8 | 19,9 |
| $T^{OH}$ | 14,5 | 24,1 | 23,9 | 13,2 | 21,1 |
| $T^{(OH)2}$ | 0,6 | 2,4 | 1,8 | 0 | 0 |
| T | 42,9 | 36,2 | 34,9 | 62,1 | 59 |
| OH-Gehalt (Gew-%) | 3,2 | 5,8 | 5,2 | 2,5 | 3,9 |
| Auswaage [g] | 13,8 | 6,7 | 14 | 12,4 | 11,8 |
| Filterkuchen [g] bezüglich Siliconat | 1 6,7% | 0,6 8,3% | 1,3 8,7% | 0 0% | 1,2 8% |
| Ausbeute | 75% | 76% | 78% | 69% | 66% |

Es ist offensichtlich, dass sprühgetrocknetes Pulver eine deutlich höhere Silanolkonzentration ergibt als azeotrop getrocknetes (4b.1/2). Dies kann auf Kondensationseffekte während der Trocknung zurückgeführt werden. Bei geringerem Kaliumanteil kehrt sich der Effekt offenbar um (4b.3/4). Eine Erhöhung des Silanolgehalts lässt sich dann allerdings mit einem unpolaren Lösungsmittel erzielen (4b.5).

**Beispielserie 5** zeigt die Ergebnisse mit Mischungen von Trimethylchlorsilan und Dimethyldichlorsilan mit einem Kaliummethylsiliconat (K:Si=0,5) 16,7 Gew.-% in MTBE[1)]

Tabelle 5

| Beispiel | 5.1 | 5.2 |
|---|---|---|
| Molverhältnis K:M3:M2 | 1:0,8:0,1 | 1:0,6:0,2 |
| M | 27,2 | 21,4 |
| $T^{OH}$ | 24,5 | 17,8 |
| $T^{(OH)2}$ | 0,3 | 0,2 |
| T | 44,4 | 53,4 |
| D | 3,5 | 7,2 |
|  | 0,2 | 0,5 |
| OH-Gehalt (Gew-%) | 5,9 | 4,4 |
| Auswaage [g] | 14,7 | 8,6 |
| Filterkuchen [g] bzgl. Siliconat | 2,2 14,7% | 6,3 42% |
| Ausbeuten M/D/T [%] | 86/94/92 | 54/57/56 |
| Ausbeute [%] | 84 | 50 |
| Methoxy-Gehalt [Gew. -%] | 0,009 | n.b. |

Daraus ist ersichtlich, dass mit zunehmendem Anteil difunktioneller Einheiten (Dimethyldichlorsilan) die Ausbeute an flüssigem Siloxan sowie der Silanolgehalt sinken.

**Beispiel 6**

Umsetzung von Siliconat mit Milchsäure (nicht erfindungsgemäß analog EP0228978)

Zu einer Suspension von 15 g Kaliummethylsiliconat K:Si=0,56 [liegt laut Elementaranalyse tetramer vor: 0,147 mol MeSi, 0,08 mol K] (K:Si = 0,56; 0,08 mol K) in 75 g MTBE wird bei 20,5°C unter Rühren innerhalb von 10 Minuten eine Lösung von 8,7 g 85%ige Milchsäure in 17,9 g Wasser zudosiert. Die Temperatur der Reaktionsmischung steigt dabei auf 22,7°C. Man lässt die trübe Mischung 24 Stunden bei Raumtemperatur rühren und filtriert anschließend Schwebteilchen ab. Das Filtrat trennt sich in zwei farblose, klare Phasen auf. Die obere Phase wird abgetrennt und bei 40°C/3 hPa eingeengt. Als Rückstand verbleiben 15,6 g eines farblosen Feststoffs, der nach dem $^{29}$Si-NMR-Spektrum folgende Zusammensetzung aufweist: 19,9 mol-% [$MeSi(OH)O_{2/2}$] und 80,1 % [$MeSiO_{3/2}$], der kalkulierte OH-Gehalt liegt bei 4,9 Gew.-%.

Aufgrund der Abwesenheit von Trimethylsilyl-Resten führt dieses Verfahren zur Bildung eines Feststoffs.

**Patentansprüche**

1. Verfahren zur Herstellung von bei 25°C und 1 bar flüssigen 2 bis 12 Gew.-% Silanolgruppen aufweisenden Siloxanen der allgemeinen Formel (1):

$$M_a D_b T_c Q_d M'_e D'_f T'_g \qquad (1),$$

bei dem Metallsalze von Silanolen der allgemeinen Formel (2) oder deren Kondensationsprodukte,

$$R_l Si(OH)_{4-1-m} (O^- Z^{r+}{}_{1/r})_m \qquad (2)$$

mit Silanen der allgemeinen Formel (3):

$$R'_n SiX_{4-n} \qquad (3)$$

in einem Verhältnis umgesetzt werden, das nach folgender Gleichung berechnet wird:
Mol Organosiliconat der allgemeinen Formel (2) :

```
Mol Silan der allgemeinen Formel (3) =
x * (4-n)/m,
```

wobei x = 0,8 bis 1,2 beträgt,
wobei

**M** eine Einheit ($R_3SiO_{1/2}$),
**D** eine Einheit ($R_2SiO_{2/2}$),
**T** eine Einheit ($RSiO_{3/2}$),
**Q** eine Einheit ($SiO_{4/2}$),
**M'** eine Einheit ($R'_3SiO_{1/2}$),
**D'** eine Einheit ($R'_2SiO_{2/2}$),
**T'** eine Einheit ($R'SiO_{3/2}$),
**R** einen organischen über Kohlenstoff an Silicium gebundenen Rest,
**R'** Wasserstoff-, einen unsubstituierten oder substituierten Alkoxyrest, einen unsubstituierten oder durch Halogenatome, Epoxy-, Thiol-, Nitril-, (Poly)ether, Carboxyalkyl-, Alkoxy- oder Silylgruppen substituierten Kohlenwasserstoffrest mit 1 bis 20 Kohlenstoffatomen bedeuten,

die Relationen gelten:

**a** = 0 bis 0,2 * (a+b+c+d+e+f+g),
**b** = 0 bis 0,2 * (a+b+c+d+e+f+g),
**c** = 0,3 bis 0,9 * (a+b+c+d+e+f+g),
**d** = 0 bis 0,2 * (a+b+c+d+e+f+g),

**e** = 0,05 bis 0,6 * (a+b+c+d+e+f+g),
**f** = 0 bis 0,6 * (a+b+c+d+e+f+g),
**g** = 0 bis 0,1 * (a+b+c+d+e+f+g),

und (a+b+c+d+e+f+g) = 1

**l** Werte von 0,8 bis 1,3,
**r** die Werte 1, 2, 3 oder 4,
**n** die Werte 1, 2 oder 3,
**Z** Metallkation und
**X** hydrolysierbare Reste bedeuten, die ausgewählt werden aus Halogenrest und Carboxyalkylrest.

2. Verfahren nach Anspruch 1, bei dem **R** einen Kohlenwasserstoffrest mit 1 bis 8 Kohlenstoffatomen bedeutet.

3. Verfahren nach einem oder mehreren der vorangehenden Ansprüche, bei dem **R'** einen Kohlenwasserstoffrest mit 1 bis 8 Kohlenstoffatomen bedeutet.

4. Verfahren nach einem oder mehreren der vorangehenden Ansprüche, bei dem **Z** ausgewählt wird aus Alkalimetall, Erdalkalimetall, Aluminium, Zink oder Eisen.

5. Verfahren nach einem oder mehreren der vorangehenden Ansprüche, bei dem **X** ausgewählt wird aus Halogenrest, oder Carboxyalkylrest mit 2 bis 10 Kohlenstoffatomen.

6. Verfahren nach einem oder mehreren der vorangehenden Ansprüche, bei dem die Umsetzung in einem Lösungsmittel durchgeführt wird, das ausgewählt wird aus aprotischen polaren und unpolaren organischen Lösungsmitteln.

7. 2 bis 12 Gew.-% Silanolgruppen aufweisende Siloxane der allgemeinen Formel (1) gemäß Anspruch 1.

8. Siloxane nach Anspruch 7, bei denen **R** einen Kohlenwasserstoffrest mit 1 bis 8 Kohlenstoffatomen bedeutet.

9. Siloxane nach Anspruch 7 oder 8, bei denen **R'** einen Kohlenwasserstoffrest mit 1 bis 8 Kohlenstoffatomen bedeutet.

10. Siloxane nach einem oder mehreren der Ansprüche 7 bis 9, deren Alkoxygehalt höchstens 0,2 Gewichtsprozent beträgt.

**Claims**

1. Process for preparing siloxanes which are liquid at 25°C and 1 bar, have 2% to 12% by weight of silanol groups and are of the general formula (1):

$$M_a D_b T_c Q_d M'_e D'_f T'_g \qquad (1),$$

in which metal salts of silanols of the general formula (2) or condensation products thereof

$$R_l Si(OH)_{4-l-m} (O^- Z^{r+}_{1/r})_m \qquad (2)$$

are reacted with silanes of the general formula (3):

$$R'_n SiX_{4-n} \qquad (3)$$

in a ratio which is calculated by the following equation:
mol of organosiliconate of the general formula (2):

```
mol of silane of the general formula (3) =
x * (4-n)/m,
```

where x = 0.8 to 1.2,
where

**M** is a ($R_3SiO_{1/2}$) unit,
**D** is a ($R_2SiO_{2/2}$) unit,
**T** is a ($RSiO_{3/2}$) unit,
**Q** is a ($SiO_{4/2}$) unit,
**M'** is a ($R'_3SiO_{1/2}$) unit,
**D'** is a ($R'_2SiO_{2/2}$) unit,
**T'** is a ($R'SiO_{3/2}$) unit,
**R** is an organic radical bonded to silicon via carbon,
**R'** is hydrogen, an unsubstituted or substituted alkoxy radical, a hydrocarbyl radical which is unsubstituted or substituted by halogen atoms or epoxy, thiol, nitrile, (poly)ether, carboxyalkyl, alkoxy or silyl groups and has 1 to 20 carbon atoms,

and the following relations apply:

**a** = 0 to 0.2 * (a+b+c+d+e+f+g),
**b** = 0 to 0.2 * (a+b+c+d+e+f+g),
**c** = 0.3 to 0.9 * (a+b+c+d+e+f+g),
**d** = 0 to 0.2 * (a+b+c+d+e+f+g),
**e** = 0.05 to 0.6 * (a+b+c+d+e+f+g),
**f** = 0 to 0.6 * (a+b+c+d+e+f+g),
**g** = 0 to 0.1 * (a+b+c+d+e+f+g),

and (a+b+c+d+e+f+g) = 1

**1** has values of 0.8 to 1.3,
**r** has the values of 1, 2, 3 or 4,
**n** has the values of 1, 2 or 3,
**Z** is a metal cation and
**X** denotes hydrolysable radicals which are selected from halogen radical and carboxyalkyl radical.

2. Process according to Claim 1, in which **R** is a hydrocarbyl radical having 1 to 8 carbon atoms.

3. Process according to one or more of the preceding claims, in which **R'** is a hydrocarbyl radical having 1 to 8 carbon atoms.

4. Process according to one or more of the preceding claims, in which **Z** is selected from alkali metal, alkaline earth metal, aluminium, zinc and iron.

5. Process according to one or more of the preceding claims, in which **X** is selected from halogen radical and carboxyalkyl radical having 2 to 10 carbon atoms.

6. Process according to one or more of the preceding claims, in which the reaction is conducted in a solvent which is selected from aprotic polar and nonpolar organic solvents.

7. Siloxanes which have 2% to 12% by weight of silanol groups and are of the general formula (1) according to Claim 1.

8. Siloxanes according to Claim 7, in which **R** is a hydrocarbyl radical having 1 to 8 carbon atoms.

9. Siloxanes according to Claim 7 or 8, in which **R'** is a hydrocarbyl radical having 1 to 8 carbon atoms.

10. Siloxanes according to one or more of Claims 7 to 9, wherein the alkoxy content is not more than 0.2 per cent by weight.

**Revendications**

1. Procédé pour la préparation de siloxanes liquides à 25°C et à 1 bar présentant 2 à 12% en poids de groupes silanol, de formule générale (1) :

$$M_aD_bT_cQ_dM'_eD'_fT'_g \qquad (1),$$

dans lequel des sels métalliques de silanols de formule générale (2) ou leurs produits de condensation $R_1Si(OH)_{4-1-m}(O^-Z^{r+}_{l/r})_m$ (2) sont transformés avec des silanes de formule générale (3) :

$$R'_nSiX_{4-n} \qquad (3)$$

dans un rapport calculé selon l'équation suivante : nombre de moles d'organosiliconate de formule générale (2) :

```
nombre de moles de silane de formule générale (3) =
x * (4-n)/m,
```

avec x = 0,8 à 1,2,

M signifiant une unité $(R_3SiO_{1/2})$,
D signifiant une unité $(R_2SiO_{2/2})$,
T signifiant une unité $(RSiO_{3/2})$,
Q signifiant une unité $(SiO_{4/2})$,
M' signifiant une unité $(R'_3SiO_{1/2})$,
D' signifiant une unité $(R'_2SiO_{2/2})$,
T' signifiant une unité $(R'SiO_{3/2})$,
R signifiant un radical organique relié via carbone au silicium,
R' signifiant hydrogène, un radical alcoxy non substitué ou substitué, un radical hydrocarboné non substitué ou substitué par des atomes d'halogène, des groupes époxy, thiol, nitrile, (poly)éther, carboxyalkyle, alcoxy ou silyle, comprenant 1 à 20 atomes de carbone,

les relations suivantes étant d'application :

a = 0 à 0,2 * (a + b + c + d + e + f + g),
b = 0 à 0,2 * (a + b + c + d + e + f + g),
c = 0,3 à 0,9 * (a + b + c + d + e + f + g),
d = 0 à 0,2 * (a + b + c + d + e + f + g),
e = 0,05 à 0,6 * (a + b + c + d + e + f + g),
f = 0 à 0,6 * (a + b + c + d + e + f + g),
g = 0 à 0,1 * (a + b + c + d + e + f + g) et (a + b + c + d + e + f + g) = 1
1 signifiant les valeurs de 0,8 à 1,3,
r signifiant les valeurs 1, 2, 3 ou 4,
n signifiant les valeurs 1, 2 ou 3,
Z signifiant un cation métallique et
X signifiant des radicaux hydrolysables, qui sont choisis parmi un radical halogène et un radical carboxyalkyle.

2. Procédé selon la revendication 1, dans lequel R signifie un radical hydrocarboné comprenant 1 à 8 atomes de carbone.

3. Procédé selon l'une ou plusieurs des revendications précédentes, dans lequel R' représente un radical hydrocarboné comprenant 1 à 8 atomes de carbone.

4. Procédé selon l'une ou plusieurs des revendications précédentes, dans lequel Z est choisi parmi un métal alcalin, un métal alcalino-terreux, l'aluminium, le zinc ou le fer.

5. Procédé selon l'une ou plusieurs des revendications précédentes, dans lequel X est choisi parmi un radical halogène ou un radical carboxyalkyle comprenant 2 à 10 atomes de carbone.

**6.** Procédé selon l'une ou plusieurs des revendications précédentes, dans lequel la transformation est réalisée dans un solvant qui est choisi parmi les solvants organiques aprotiques polaires et non polaires.

**7.** Siloxanes présentant 2 à 12% en poids de groupes silanol de formule générale (1) selon la revendication 1.

**8.** Siloxanes selon la revendication 7, dans lesquels R signifie un radical hydrocarboné comprenant 1 à 8 atomes de carbone.

**9.** Siloxanes selon la revendication 7 ou 8, dans lesquels R' signifie un radical hydrocarboné comprenant 1 à 8 atomes de carbone.

**10.** Siloxanes selon l'une ou plusieurs des revendications 7 à 9, dont la teneur en alcoxy est d'au plus 0,2% en poids.

**EP 3 221 385 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0228978 A
- WO 2012022544 A
- WO 2012159874 A
- WO 13075969 A
- WO 13174689 A
- WO 15140075 A
- WO 15176977 A
- EP 2011061766 W
- EP 2012058370 W

**In der Beschreibung aufgeführte Nicht-Patentliteratur**

- **SHCHEGOLIKHINA, O.I. et al.** *Russian Chemical Bulletin, International Edition,* Januar 2007, vol. 56 (1), 83-90